# EUROPEAN PATENT APPLICATION

(11) **EP 3 220 084 A1**
(43) Date of publication of application: **20.09.2017**
(21) Application number: 16000640.9
(22) Date of filing: 16.03.2016
(51) Int. Cl.: F27B 3/02, C21B 13/00, C21B 13/12, F27B 3/08, F27B 3/20, F27D 11/00, F27D 99/00, F27D 17/00

(54) **TREATMENT OF PARTICULATE WASTE**

(71) Applicant: Linde Aktiengesellschaft, 80331 München (DE)
(72) Inventor: CAMERON, Andrew, Matlock Derbyshire DE4 5WA (GB)
(74) Representative: Gellner, Bernd

(57) **Abstract**

The present invention relates to a process for the treatment of iron-containing particulate waste, the process comprising:
providing an iron-containing particulate waste having a moisture content of less than 50wt%;
heating the iron-containing particulate waste in a treatment chamber of an oxy-fuel furnace comprising an oxy-fuel burner, to form a slag and, optionally, a molten iron layer;
wherein the treatment chamber is provided with an electrical secondary heating means.

## Description

The present disclosure relates to a method for the treatment of iron-containing particulate waste and, in particular, to a more efficient method for the reduction of iron.

Oxyfines™ is an Oxyfuel-based technology developed by AGA Linde for in-plant recycling. It has been developed to enable the efficient on-site recycling of fines, dust and sludge, and has been directly applied to existing processes. It provides a solution to most dust treatment and recycling problems in the metallurgical industry. Oxyfines™ technology uses an oxy-fuel burner. More information on the oxy-fuel and Oxyfines™ system is provided in "Oxyfines technology for the re-melting of fines, dust and sludge", J. von Schèele, Tenth International Ferroalloys Congress; 1 - 4 February 2004, INFACON X: Transformation through Technology ISBN: 0-9584663-5-1.

The Oxyfines™ method allows fines, dust, sludge (with no drying stage) and other byproducts to be recycled directly back into existing processes or to a separate on-site unit. The technology has been successfully applied to the recycling of a number of dry and wet materials, including iron powder dust and rejects, fines, dust and sludge from the production of various ferroalloys (ferrosilicon, ferrochrome and silicon manganese), carbon and stainless steel production dust, and dust and sludge from blast furnaces and steel-making converters. Since the recycled materials contain metals, the technology not only provides a solution to the problems associated with dust and sludge-generation in metal production, it also converts waste materials into a low-cost raw material that can be used in various processes, substituting raw material input.

In practice and when applied to the processing of iron and steel plant wastes, the existing Oxyfines™ process volatilises zinc and alkali metals that cannot be recycled to the blast furnace and it generates a slag product with a very high iron oxide content. Such slags are extremely aggressive towards refractories.

A second issue related to the original mode of operation was that the slag had to be recycled to the blast furnace *via* a sinter strand. This incurs an energy penalty in the form of fuel gas and coke consumption because the iron oxide has to undergo various processes. In particular, the iron oxide has to be heated to melting temperatures in the Oxyfines™ furnace before being cooled and crushed. It is then reheated in the sinter plant where it is cooled once again before being charged to the blast furnace where it is re-heated to elevated temperatures to facilitate its reduction to iron.

Accordingly, there is a desire for a process that can treat iron and steel plant wastes to produce a slag product that is easier to handle than in prior art processes or, at least, to provide a commercially useful alternative thereto.

According to a first aspect, the present disclosure provides a process for the treatment of iron-containing particulate waste, the process comprising:
providing an iron-containing particulate waste having a moisture content of less than 50wt%, preferably less than 35wt%;
heating the iron-containing particulate waste in a treatment chamber of an oxy-fuel furnace comprising an oxy-fuel burner, to form a slag and, optionally, a molten iron layer;
wherein the treatment chamber is provided with an electrical secondary heating means.

Advantageously, the present inventors have found that the provision of an electrical secondary heating means allows at least some of the iron oxide present in the waste to be reduced to molten iron, reducing the amount of iron oxide present in the slag and thereby making it less aggressive towards refractories. The slag is therefore easier to process and/or recycle.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The present disclosure relates to a process for the treatment of an iron-containing particulate waste. The waste is preferably obtained from an iron and steel plant blast furnace. The waste is preferably in the form of fines, dust or sludge. Where the waste is in the form of sludge, drying can be combined with partial reduction of oxides. The waste does not require briquetting before treatment. Sludges are often produced during off-gas treatment of iron or steel plants following wet-scrubbing of particulates carried in the off-gas.

The iron-containing particulate waste preferably has a mean longest particle diameter of less than 10 mm, more preferably less than 5 mm, and still more preferably less than 1 mm. The particles most preferably have a mean longest particle diameter of less than 0.5 mm. The particles preferably have a mean longest particle diameter of at least 0.001 mm. This can be measured using an optical microscope.

Preferably, the iron-containing particulate waste comprises from 20 to 50 wt% iron oxide by dry weight of the waste, more preferably from 25 to 40 wt%, and most preferably from 30 to 35 wt%. The term "iron oxide" as used herein includes both iron (II) oxide and iron (III) oxide.

Preferably the iron-containing particulate waste comprises from 30 to 60 wt% carbon by dry weight of the waste, more preferably from 40 to 55 wt%, and most preferably from 45 to 50 wt%. As will be explained below, the heating step of the present process is particularly effective where carbon is present in the particulate iron-containing waste.

The iron-containing particulate waste may contain other components, such as SiO₂, Al₂O₃, MgO, SO₃, PbO, Na₂O and K₂O. Where present, each component is preferably present in an amount of from 0.2 to 5 wt% by dry weight of the waste.

The higher the water content, the higher the energy penalty associated with the treatment of sludge and the greater the amount of oxidant present. As will be appreciated, there is almost always a significant amount of water present as a result of the methods for dust handling and recovery. Where the waste is obtained from an iron or steel plant blast furnace, waste dewatered by a filter press typically has a moisture content of about 35%, while waste from a centrifuge typically has a moisture content of about 55%. The waste from a clarifier typically contains about 80% moisture, and so processing this material carries a relatively high energy penalty.

It has been found that, in order to be cost effective, the iron-containing particulate waste must have a water content of less than 50wt%, preferably less than 40wt%, most preferably less than 35wt%. If the waste has a greater water content, then in order to make the process commercially viable it will generally be necessary to perform an initial drying step to reduce the water content of the sludge to below 50wt%, preferably less than 40wt%, most preferably less than 35wt%. Typically the waste will have a water content of from 10 to 30wt%.

The process comprises heating the iron-containing particulate waste in a treatment chamber of an oxy-fuel furnace. The oxy-fuel furnace comprises an oxy-fuel burner. Such furnaces are known, for example, in WO 2002/066895 and WO 2006/107256. In these furnaces the oxy-fuel burner may be thought of as the primary heating means, since it is the sole heating means.

The treatment chamber according to the present invention is provided with an electrical secondary heating means. That is, the chamber is provided with a non-oxidative heating means which increases the reaction temperature without a concomitant increase in the level of oxidants within the treatment chamber. The term "secondary" as used herein is not intended to mean that the secondary heating means necessarily provides less power than the oxy-fuel burner. Instead, it simply reflects the fact that the heating is carried out in an oxy-fuel furnace, with the secondary heating means being provided in addition to the oxy-fuel burner (the primary heating means). Examples of electrical secondary heating means are well known and include inductive or resistive heating as well as plasma torch heating by electrical discharge within the reaction chamber. Preferably, the secondary heating means comprises one or more plasma torches.

The conventional Oxyfines™ process uses oxy-fuel burner technology to provide the required heat. Iron plant wastes typically contain large amounts of carbon and this can be combusted in the presence of excess oxygen to reduce the consumption of fuel gas. However, the present inventors have found that oxy-fuel burner technology is not effective at reducing the iron oxide content of the slag. The reduction of iron oxide by carbon is endothermic and, if the reaction is to take place, additional energy must be provided to maintain the temperature required to melt the condensed phases present in the furnace. Burning further fuel gas to provide the additional heat is counterproductive because the combustion products maintain the oxygen potential of the treatment chamber at levels at which iron oxide reduction cannot be sustained. Moreover, increasing the volume of combustion products promotes the oxidation of the carbon present, so that it cannot serve to reduce the iron oxide.

The present inventors have found that reduction of at least some of the iron oxide becomes possible if an electrical secondary heating means is provided. The electrical secondary heating means is able to supplement the heat provided by an oxy-fuel burner without introducing more oxygen into the process. Thus, the conditions within the chamber remain sufficiently reducing for iron oxide to be reduced to iron. The extent of reduction attained depends upon the ratio of burner to plasma power and the quantity of carbon present in the waste materials as well as the quantities of iron oxide and water. These are discussed herein elsewhere. The electrical secondary heating means is particularly advantageous in cases where the waste contains a significant amount of carbon. This is because making the atmosphere more reducing frees up more of the carbon to serve as a reductant for the iron oxide. In contrast, an overly oxidising atmosphere causes the carbon to be readily oxidised to CO by oxidising gases so that it cannot perform this function.

Accordingly, the heating of an iron-containing particulate waste in the treatment chamber of the oxy-fuel furnace forms a slag and, optionally, a molten iron layer. Preferably, the slag comprises less than 50 wt% iron oxide by total weight of the slag. Preferably that slag comprises less than 30 wt% iron oxide, more preferably less than 20 wt%, still more preferably less than 10 wt%, still more preferably less than 5 wt%, and most preferably less than 1 wt%. Advantageously, these levels are significantly less than in the iron oxide levels found in slags obtained from prior art processes (typically around 70 wt%).

The slag may additionally contain other minerals such as CaO, CaS, SiO₂, and Al₂O₃. The relative proportions of these minerals may be adjusted if necessary by the addition of fluxing agents to ensure a fluid slag phase at the desired operating temperature. As will be appreciated, the levels of additional minerals will also vary depending on the composition of the iron-containing particulate waste and its water content. A typical slag composition is of 0-2% FeO, 5-15%MgO, 15-30% CaO, 25-35% Al₂O₃ and 25-40% SiO₂.

Where present, the molten iron layer typically forms on the bottom of the chamber and may be drawn off separately from the slag. The molten iron layer may comprise small quantities of other metals and impurities, such as Si or Mn, at levels reflecting their content in the waste materials processed and their thermodynamic partitioning between the metal and slag layers. For example, the molten iron layer may comprise from 0 to 5 wt% carbon by total weight of the molten iron layer. Preferably, the molten iron layer comprises from 95 to 99 wt% iron by total weight of the molten iron layer, preferably the molten iron layer consists essentially of iron.

Preferably, where the iron-containing particulate waste is obtained from an iron and steel plant blast furnace, at least a portion of the slag and/or molten iron layer is recycled to the iron and/or steel plants, improving the overall yield iron obtained from the sites raw materials. The slag has a significantly reduced concentration of iron oxide relative to slags produced from prior art Oxyfines™ processes, and is significantly less aggressive towards refractories.

As noted above, the heating of the iron-containing particulate waste in the oxy-fuel furnace may form a molten iron layer. In particular, adjustment of the energy input conditions and the quantity of carbon added to the oxy-fuel furnace enables the generation of a liquid metal product that can be recycled directly to the basic oxygen steelmaking (BOS) converter and this will save energy at the sinter strand and the blast furnace. Lowering the amount of iron oxide in the slag also helps avoid the above-discussed negative operational consequences associated with an iron-oxide rich product.

The inventors have found that the provision of secondary heating leads to reduced coke and ore consumption per tonne of steel due to a reduced need to recycle slag to the blast furnace by means of the sinter strand. This is further supplemented by a reduction in waste and associated disposal costs.

The water content of the iron-containing particulate waste depends on how it is processed prior to the Oxyfines™ treatment. Where the waste is obtained from an iron or steel plant blast furnace, waste dewatered by a filter press typically has a moisture content of about 35%, while waste from a centrifuge typically has a moisture content of about 55%. The waste from a clarifier typically contains about 80% moisture, and so processing this material carries a relatively high energy penalty.

The inventors have found that where the iron-containing particulate waste has a high water content, the large amount of steam in the treatment chamber atmosphere leads to excessively high oxygen potential preventing the reduction of iron oxide. Where the iron-containing particulate waste comprises fines, dust, or sludge with a water content of below about 50 wt% the introduction of the secondary, non-oxidative, heat source can lead to significant reduction of iron oxide. Conversely, where the iron-containing particulate waste comprises a water content of greater than 50 wt%, preferably a water content of greater than 35wt%, a drying step may be required prior to the oxy-fuel treatment step in order to enable significant iron oxide reduction.

In another aspect the invention further comprises providing an iron-containing particulate waste having a moisture content of from 50 to 80wt%, preferably from 35 to 80wt% and drying the iron-containing particulate waste to provide the iron-containing particulate waste having a moisture content of less than 50wt%, preferably less than 35wt%.

Preferably the drying step is performed in a cyclonic dryer.

Preferably the cyclonic dryer is driven by a flow of gases which comprises hot gases:
(i) obtained by combustion of natural gas; and/or
(ii) obtained by combustion of blast furnace gas; and/or
(iii) pre-heated by electrical heating of a gas flow, such as with plasma, induction or resistive heating; and/or
(iv) obtained by hot gases obtained from hot blast stoves (such as 250 to 400°C); and/or
(v)combustion of a CO-containing off-gas recovered from the treatment chamber.

The inventors have found that an off-gas which can be obtained by also lancing oxygen into the treatment chamber during the oxy-fuel treatment has a high CO content and therefore has a significant calorific value. This CO-containing off-gas can be recycled and used as a fuel source for the drying step.

Oxyfuel or electrical heating may be particularly favourable to provide hot gases as they minimise the gas volume. Alternatively, recycling the CO-containing off gas recovered from the treatment chamber may offer cost and efficiency advantages. Where the iron-containing particulate waste is obtained from an iron and steel plant blast furnace, the hot off-gas from the hot blast stoves may be used as a direct heat source for the drying step or indirect (heat exchanger).

The inventors have found that carbon in the iron-containing particulate waste may alternatively or in addition be combusted during the drying step to provide heat. However, it is essential that sufficient carbon is retained for the oxy-fuel treatment in order to facilitate iron oxide reduction.

The total power input required in the iron-containing particulate waste treatment depends primarily on two factors. Firstly, the ratio of C:Fe. Carbon not needed for iron oxide reduction can be burnt as a fuel. Therefore, a high C:Fe ratio means surplus carbon and reducing the power input required. Secondly, the water content of the iron-containing particulate waste, water present in the waste will be boiled either during the oxy-fuel treatment or during the preceding drying step, in either case the heat duty required for dewatering will have a significant effect of the total power input. Preferably the total power supplied to the treatment chamber is from 1 to 20 kW per kg waste.

Preferably a ratio of the power supplied to the treatment chamber by the oxy-fuel burner relative to the electrical secondary heating means is from 5:1 to 1:10, preferably from 3:1 to 1:5, more preferably about 1:3.

Preferably, the temperature in the treatment chamber is from 1200 to 1800 °C, more preferably from 1400 to 1600 °C, and most preferably about 1500 °C.

Preferably the atmosphere within the treatment chamber comprises an Oxygen potential of less than 3x10⁻¹⁰kPa.

Preferably the iron-containing particulate waste is obtained from an iron or steel plant blast furnace. It is further preferred that at least a portion of the slag and/or molten iron layer is recycled to the iron and/or steel plant.

Advantageously, the present invention allows high temperatures to be reached in the treatment chamber at relatively low partial pressures of oxygen. This is achieved because of the use of the electrical secondary heating means.

The invention will now be described in relation to the following non-limiting figures, in which:

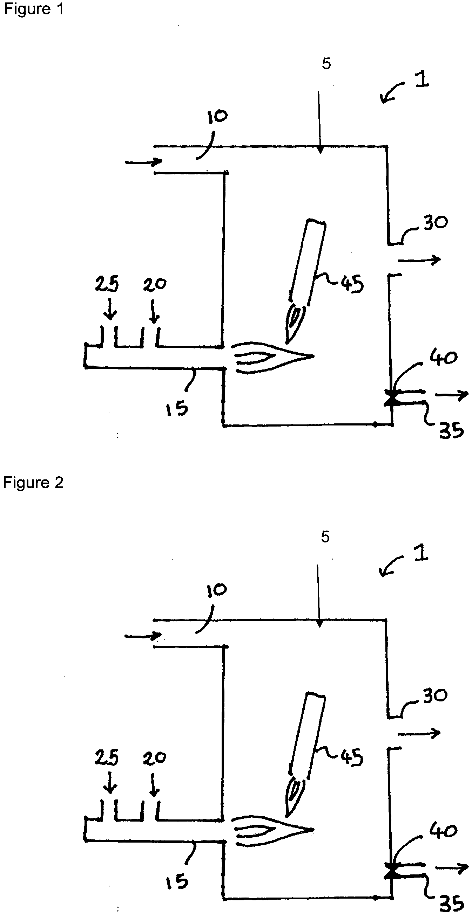

Figure 1 shows a schematic of the treatment system described herein.
In particular, Figure 1 shows an Oxyfuel treatment system 1 comprising a refractory-lined treatment chamber 5. The chamber 5 has a feed inlet 10 for providing particulate material to be treated (not shown).

The chamber 5 is provided with an Oxyfuel burner 15 provided with a supply of oxygen 20 and fuel 25, such as methane gas. The chamber 5 has an off-gas outlet 30 connected to a gas remediation system (not shown) and an outlet 35 for treated material including slag and/or metal. The outlet 35 is provided with a means for closure 40.
The chamber 5 is further provided with an electrical secondary heating means 45. A plasma torch is shown in the Figure.

In use, iron-containing particulate waste material is fed into the chamber 5 *via* the feed inlet 10. The particulate material is heated in the chamber 5 by both the oxy-fuel burner 15 and the secondary electrical heating means 45 to form a slag layer and a molten iron layer. The slag layer and/or the molten metal layer are intermittently withdrawn through the solids outlet 35 for further processing.

Figure 2 shows a schematic of an alternative embodiment of the treatment system described herein.

In particular, Figure 2 shows an oxyfuel treatment system 100 comprising a refractory lined chamber 150. The chamber 150 has an inlet 120 for providing dried particulate from a cyclonic dryer 115. The Chamber 150 is provided with an oxyfuel burner 155 provided with a supply of oxygen 160. The chamber 150 has an outlet 145 for off-gas.

The cyclonic dryer has an outlet 110 for H₂O rich off-gas, and an inlet 165. The cyclonic dryer is provided with a supply of particulate 105, fuel gas 125, and recycled CO-rich off-gas from the oxy-fuel burner.

The invention will now be described in relation to the following non-limiting examples.

### Examples

The amount of iron produced and the FeO content of the slag for a given water content of the iron-containing particulate waste depends on the ratio of heat supplied by the oxyfuel burner to that of the secondary, electrical heating means. Table 1 provides modelled data investigating this relationship. The data corresponds to the iron-containing particulate waste with 35wt% water and the secondary heating means comprising a plasma torch.

In the first 4 rows of Table 1 the oxyfuel burner is fired stoichiometrically. In the last three rows the burner is fired sub-stoichiomentrically to allow some oxygen to be lanced into the melt to combust residual or dissolved carbon. In each case most of the power is delivered by the electrical plasma and that the higher the ratio of plasma to burner power the greater the iron recovery.

The final row of the table shows that by pre-drying the sludge it would be possible to use plasma to burner power ratio of 0.3. If the sludge is pre-dried it is possible to secure a high iron yield at lower plasma to burner power ratios.

**Table 1:**

| Burner Power MW | Natural Gas Nm3/h | Oxygen Nm3/h | Plasma MW | Lanced Oxygen Nm3/h | Fe produced kg/h | Slag produced kg/h | Slag %FeO | Gas oxygen pressure |
|---|---|---|---|---|---|---|---|---|
| 0 | 0 | 0 | 1.9 | 0 | 146 | 90.4 | 0 | < 5 x E-13 |
| 0.15 | 24 | 48 | 1.8 | 0 | 137 | 101 | 10.5 | 1 x E-11 |
| 0.3 | 50 | 100 | 1.6 | 0 | 110 | 136 | 33.7 | 1 x E-10 |
| 0.45 | 75 | 150 | 1.4 | 0 | 68 | 190 | 52 | 2.7 x E-10 |
| | | | | | | | | |
| 0.2 | 50 | 75 | 1.75 | 0 | 130 | 110 | 18 | 3 E-11 |
| 0.2 | 50 | 75 | 1.65 | 20 | 114 | 130 | 30 | 9 x E-11 |
| 0.1 | 20 | 30 | 1.6 | 30 | 120 | 123 | 27 | 7 x E-11 |
| | | | | | | | | |
| 0.9 | 130 | 260 | 0.3 | 190 | 214 | 434 | 4 | 2 x E-12 |

The data shows a secondary heating means, preferably a non-oxidative means, most preferably a plasma burner, enables reducing conditions to be maintained in the treatment chamber. The process of the present invention allows iron-containing particulate waste to be treated to produce a metal layer and a slag layer. The slag layer contains very low FeO content. This process reduces the energy cost of treating the iron-containing particulate waste, as instead of having to recycle an FeO rich slag to a blast furnace, which requires more fuel to heat the slag in further steps, the metal stream may be passed to a basic oxygen steelmaking (BOS) convertor to produce steel.

Although preferred embodiments of the invention have been described herein in detail, it will be understood by those skilled in the art that variations may be made thereto without departing from the scope of the invention or of the appended claims.

## Claims

1. A process for the treatment of iron-containing particulate waste, the process comprising:
providing an iron-containing particulate waste having a moisture content of less than 50wt%;
heating the iron-containing particulate waste in a treatment chamber of an oxy-fuel furnace comprising an oxy-fuel burner, to form a slag and, optionally, a molten iron layer;
wherein the treatment chamber is provided with an electrical secondary heating means.

2. The process according to claim 1, further comprising providing an iron-containing particulate waste having a moisture content of from 35 to 80wt%, preferably a waste having a moisture content of from 50 to 80wt%, and drying the iron-containing particulate waste to provide the iron-containing particulate waste having a moisture content of less than 50wt%, preferably less than 35wt%.

3. The process according to claim 1 or claim 2, wherein the drying step is performed in a cyclonic dryer.

4. The process according to claim 3, wherein the cyclonic dryer is driven by a flow of gases comprising hot gases:
(i) obtained by combustion of natural gas; or
(ii) obtained by combustion of blast furnace gas; or
(iii) pre-heated by electrical heating, such as plasma, induction or resistive heating; or
(iv) obtained from hot blast stoves; or
(v)combustion of a CO-containing off-gas recovered from the treatment chamber;
or a combination of two or more thereof.

5. The process according to claim 4, wherein the iron-containing particulate waste contains carbon and wherein the CO-containing off-gas is obtained by lancing oxygen into the treatment chamber.

6. The process according to any of the preceding claims, wherein the total power supplied to the treatment chamber is from 1 to 20 kW per kg waste.

7. The process according to any of the preceding claims, wherein a ratio of the power supplied to the treatment chamber by the oxy-fuel burner relative to the electrical secondary heating means is from 5:1 to 1:10, preferably from 3:1 to 1:5.

8. The process according to any of the preceding claims, wherein the temperature in the treatment chamber is from 1200 to 1800 °C.

9. The process according to any of the preceding claims, wherein the oxygen potential in the treatment chamber is less than 3x10⁻¹⁰ kPa.

10. The process according to any of the preceding claims, wherein the iron-ontaining particulate waste comprises from 20 to 50 wt% iron oxide by dry weight of the waste.

11. The process according to any of the preceding claims, wherein the iron-containing particulate waste comprises from 30 to 60 wt% carbon by dry weight of the waste.

12. The process according to any of the preceding claims, wherein the slag comprises less than 30 wt% iron oxide by total weight of the slag, preferably less than 20 wt% iron oxide, more preferably less than 10 wt% iron oxide, most preferably less than 1 wt% iron oxide.

13. The process according to any of the preceding claims, wherein the step of heating the iron-containing particulate waste forms a molten iron layer, wherein at least a portion of the molten iron layer is passed to a basic oxygen steelmaking (BOS) convertor to produce steel.

14. The process according to any of the preceding claims, wherein the iron-containing particulate waste is obtained from an iron or steel plant blast furnace.

15. The process according to any of the preceding claims, wherein the electrical secondary heating means comprises one or more plasma torches.
